# EUROPEAN PATENT SPECIFICATION

(11) **EP 3 381 649 B1**
(45) Date of publication and mention of the grant of the patent: **01.01.2020**
(21) Application number: 18165443.5
(22) Date of filing: 03.04.2018
(51) Int. Cl.: B29C 45/84, B29C 45/76

(54) **INJECTION MOLDING MACHINE AND INDUSTRIAL MACHINE**
SPRITZGIESSMASCHINE UND INDUSTRIEMASCHINE
MACHINE DE MOULAGE PAR INJECTION ET MACHINE INDUSTRIELLE

(30) Priority: 31.03.2017 JP 2017071300
(43) Date of publication of application: 03.10.2018
(73) Proprietor: Sumitomo Heavy Industries, Ltd., Tokyo 141-6025 (JP)
(72) Inventor: KATOH, Atsushi, Yokosuka-shi, Kanagawa 237-8555 (JP); HASUMI, Nobuyoshi, Yokosuka-shi, Kanagawa 237-8555 (JP)
(74) Representative: Louis Pöhlau Lohrentz

(56) References cited:
- EP-A1- 2 228 204
- JP-A- H0 911 181
- JP-A- 2004 025 287
- US-A1- 2016 363 924
- YUKIO HATA ET AL: "Introduction of Safety Control of AC Servo Press", KOMATSU TECHNICAL REPORT, vol. 49, no. 151, 1 January 2003 (2003-01-01), pages 25-31, XP055257648,

## Description

### BACKGROUND OF THE INVENTION

### Field of the Invention

Certain embodiments of the present invention relate to a pressure generating device which is used in an injection molding machine or the like.

### Description of Related Art

In an injection molding machine, a servo system which performs pressure control by a motor is mounted on a mold clamping shaft thereof, or the like. The same servo system is also mounted on other industrial machines such as a servo press machine. Such an industrial machine has an emergency stop function of stopping energization of a motor if any abnormality occurs.

Japanese Unexamined Patent Application Publication No. 2004-351851 and Japanese Unexamined Patent Application Publication No. 8-288325 are the related arts.

European Patent Application EP 2 228 204 A1 discloses a control device for an electric servo press which is capable of abruptly stopping a servomotor in a safe and reliable manner within a short time period in response to an abrupt stop command, issued for example due to an emergency stop or the detected intrusion of a hand or the like into a dangerous area.

Other approaches for the controlled stopping of a rotating motor are disclosed in the US 2016/363924, JP 2004025287, and JP H0911181.

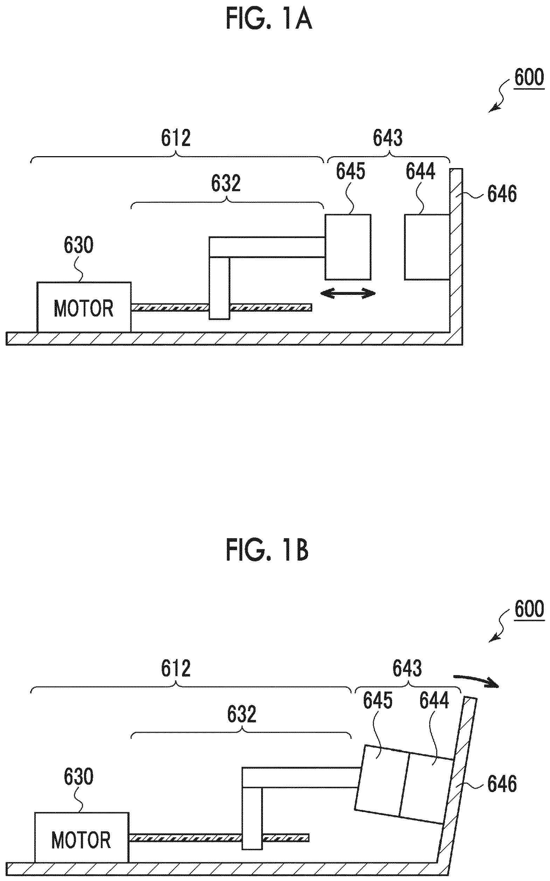

The inventors of the present invention have studied an industrial machine having an emergency stop function and as a result, have recognized the following problem. Figs. 1A and 1B are diagrams schematically showing a mold clamping shaft of an injection molding machine. An injection molding machine 600 is provided with a mold clamping unit 612 and a mold unit 643. The mold unit 643 includes a stationary mold 644 and a movable mold 645. The mold clamping unit 612 includes a mold clamping servomotor 630 and a motion conversion mechanism 632. The motion conversion mechanism 632 converts the rotary motion of the mold clamping servomotor 630 into linear motion and transmits the linear motion to the movable mold 645.

Fig. 1B shows the state during resin molding, that is, during a mold clamping operation. During the mold clamping operation, in the motor 630, torque is being generated in a state where the rotation thereof is substantially stopped, and the movable mold 645 has been pressed against the stationary mold 644 with high pressure. Due to this pressure, a frame 646 supporting the stationary mold 644 is distorted and elastic energy is stored therein.

In the state of Fig. 1B, if the emergency stop function operates, so that the torque generated in the mold clamping servomotor 630 abruptly drops to zero, the elastic energy stored in the frame 646 is released. If the released elastic energy is converted into the kinetic energy of the movable mold 645, there is a possibility that the movable mold 645 may violently move. If the movable mold 645 collides with an operation end, there is a concern that the machine may be damaged to lower reliability thereof. Further, even if the movable mold 645 does not collide with the operation end, violent movement of the movable mold 645 is not desirable because there is a concern that unnecessary vibration may be generated. The same problem is not limited to the injection molding machines and may occur in other pressure generating devices. This problem should not be regarded as general perception of those skilled in the art.

### SUMMARY OF THE INVENTION

The present invention has been made in view of the above problem, and one of exemplary objects of an aspect of the present invention is to provide a pressure generating device with improved reliability.

An aspect of the present invention relates to an injection molding machine. The injection molding machine includes: a motor; a motion conversion mechanism that converts rotary motion of the motor into linear motion of a movable mold; and a servo driver that drives the motor. The servo driver reduces supply electric power to the motor over time, if a stop event to cut off energization of the motor occurs during a mold clamping process or a holding pressure process.

The injection molding machine may further include: a rotation sensor that generates an output indicating a rotation state of the motor. The servo driver may reduce the supply electric power to the motor over time without depending on the output of the rotation sensor.

In this way, even in a case where abnormality occurs in the rotation sensor, it is possible to safely stop a device.

The servo driver may retain a drive parameter when the stop event has occurred, and gently change the drive parameter using the retained drive parameter as an initial value. The servo driver may drive the motor with pulse width modulation (PWM). The servo driver may retain a duty ratio when the stop event has occurred, and gently change the duty ratio using the retained duty ratio as an initial value. The servo driver may retain a current command value when the stop event has occurred, and gently reduce the current command value using the retained current command value as an initial value.

According to these controls, it is possible to suppress discontinuity of the torque generated by the motor before and after the occurrence of the stop event and realize a safer stop sequence.

Another aspect of the present invention relates to a pressure generating device. The pressure generating device includes: a pressure generating mechanism; a motor that drives the pressure generating mechanism; and a servo driver that controls the motor such that the pressure generating mechanism generates a desired pressure. The servo driver reduces supply electric power to the motor over time, if a stop event to cut off energization of the motor occurs in a state where rotation of the motor is substantially stopped and the torque of the motor is generated.

According to this aspect, after the occurrence of the stop event, the torque of the motor is gently reduced over time, and therefore, the energy stored in the pressure generating mechanism before the occurrence of the stop event is gently released. In this way, violent movement or vibration of a movable part of the pressure generating device can be suppressed, and eventually, reliability can be improved.

The pressure generating device may further include a rotation sensor that generates an output indicating a rotation state of the motor. The servo driver may reduce the supply electric power to the motor over time without depending on the output of the rotation sensor.

In this way, even in a case where abnormality occurs in the rotation sensor, it is possible to safely stop the device.

Still another aspect of the present invention relates to an industrial machine. The industrial machine may include any one of the pressure generating devices described above.

It is to be noted that any combination of the above constituent elements or mutual substitution of constituent elements or expressions of the present invention between methods, devices, systems, or the like is also effective as an aspect of the present invention.

According to an aspect of the present invention, it is possible to improve the reliability of the pressure generating device.

### BRIEF DESCRIPTION OF THE DRAWINGS

Figs. 1A and 1B are diagrams schematically showing a mold clamping shaft of an injection molding machine.
Fig. 2 is a block diagram of a pressure generating device according to an embodiment.
Figs. 3A to 3C are diagrams for describing an operation of the pressure generating device shown in Fig. 2.
Figs. 4A to 4C are operation waveform diagrams corresponding to stop sequences of Figs. 3A to 3C.
Fig. 5 is a block diagram of a pressure generating device according to a first example.
Fig. 6 is a block diagram of a pressure generating device according to a second example.
Fig. 7 is a block diagram of a pressure generating device according to a third example.
Fig. 8 is a diagram showing an injection molding machine.
Fig. 9 is a block diagram showing an electric system of the injection molding machine.

### DETAILED DESCRIPTION OF THE INVENTION

Hereinafter, the present invention will be described with reference to the drawings, based on a preferred embodiment. Identical or equivalent constituent elements, members, and processing shown in the respective drawings are denoted by the same reference numerals, and overlapping description is appropriately omitted. Further, an embodiment does not limit the invention and is exemplification, and all the features described in the embodiment or combinations thereof are not necessarily essential to the invention.

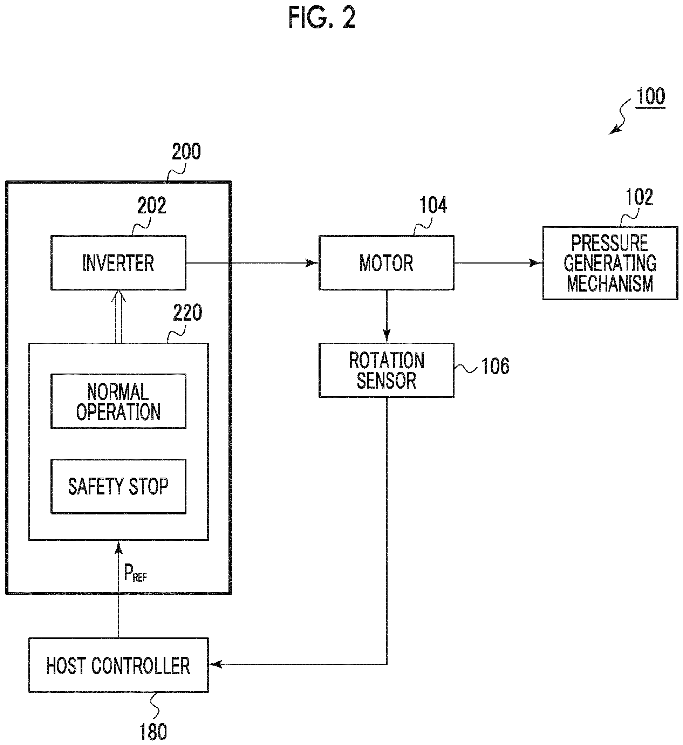

Fig. 2 is a block diagram of a pressure generating device 100 according to an embodiment. The pressure generating device 100 is provided with a pressure generating mechanism 102, a motor 104, a rotation sensor 106, and a servo driver 200. The pressure generating mechanism 102 corresponds to, for example, a combination of a motion conversion mechanism 632 and a mold unit 643 shown in Figs. 1A and 1B.

The motor 104 drives the pressure generating mechanism 102 to generate pressure. The servo driver 200 controls the motor 104 such that the pressure generating mechanism 102 generates a desired pressure during a normal operation (also referred to as a normal operation mode). The servo driver 200 includes an inverter 202 and a controller 220.

The rotation sensor 106 generates an output indicating the rotation state of the motor 104. For example, the rotation sensor 106 may be an encoder which detects the position (electric angle) of a rotor of the motor 104. The controller 220 may supply a drive signal according to a pressure command value P_{REF} which is generated according to the output of the encoder to the motor 104. The pressure command value P_{REF} may be generated by a host controller 180 or may be generated by the controller 220 itself of the servo driver 200.

The servo driver 200 enters a safety stop mode if a stop event to cut off energization of the motor 104 occurs in a state where the rotation of the motor 104 is substantially stopped and the torque of the motor is generated, and reduces the supply electric power to the motor 104 over time. That is, the controller 220 can switch between the normal operation mode and the safety stop mode.

Preferably, the controller 220 reduces the supply electric power to the motor 104 over time without depending on the output of the rotation sensor 106, in other words, without depending on the pressure command value P_{REF}, in the safety stop mode.

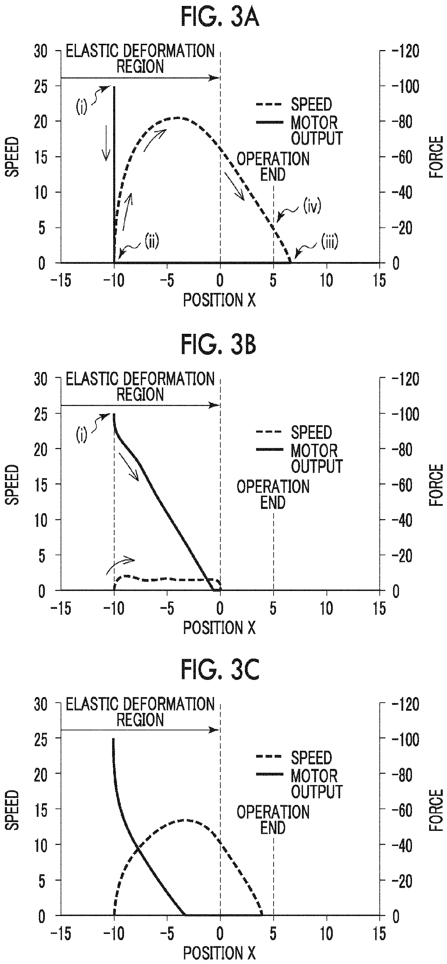

The above is the operation of the pressure generating device 100. Subsequently, the operation will be described. Figs. 3A to 3C are diagrams for describing the operation of the pressure generating device 100 shown in Fig. 2. Fig. 3A shows a stop sequence which does not depend on the safety stop mode, and Figs. 3B and 3C show a stop sequence by the safety stop mode.

In Figs. 3A to 3C, the relationship between a position and a motor output and the relationship between the position and the speed of a movable part of the pressure generating mechanism are shown. The horizontal axis represents the position of the movable part (corresponding to, for example, a movable mold 645 in Figs. 1A and 1B) of the pressure generating mechanism, the left vertical axis represents the speed of the movable part, and the right vertical axis represents the motor output. An elastic deformation region indicates a movable range in which elastic energy is stored, as shown in Fig. 1B, and the position x = 0 corresponds to a state where the movable mold 645 and a stationary mold 644 in Fig. 1A are in contact with each other. The numerical value of each axis is a value for convenience.

First, a stop sequence in the related art will be described with reference to Fig. 3A. At an operating point (i), the pressure generating device 100 is operating in the normal operation mode and is generating a constant pressure, and the speed of the movable part is zero.

If a stop event occurs at a certain point in time, the power supply to the motor is instantaneously cut off and the operating point moves to (ii). Elastic energy is converted into the kinetic energy of the movable part, so that the movable part is pushed back to obtain a speed, and the position changes. Eventually, if the speed reaches zero at an operating point (iii), the movable part stops. If the operation end of the movable part is present at a position coordinate x = 5, when passing through the position x = 5 (in the drawing, an operating point (iv)), since the movable part has a speed, the movable part collides with the operation end.

Subsequently, a stop sequence according to an embodiment will be described with reference to Fig. 3B. At the operating point (i), the pressure generating device 100 is operating in the normal operation mode and is generating a constant pressure, and the speed of the movable part is zero.

If a stop event occurs at a certain point in time, the electric power (drive current) which is supplied to the motor gently decreases, and the force which is generated by the motor decreases . At this time, the force by which elastic energy tries to push back the movable part and the force which is generated by the motor are applied to the movable part in opposite directions. In this way, acceleration of the movable part is suppressed. The force which is generated by the motor is zero when the movable part reaches the position x = 0 (an end portion of the elastic deformation region).

According to this stop sequence, since the movable part does not reach the operation end, a collision can be prevented.

Fig. 3C shows another example of the stop sequence according to the embodiment. In Fig. 3C, the motor output decreases faster than in Fig. 3B. In this case, the movable part has a higher speed than in Fig. 3B and is displaced beyond the position x = 0. However, the movable part does not reach the operation end. That is, a collision can be prevented.

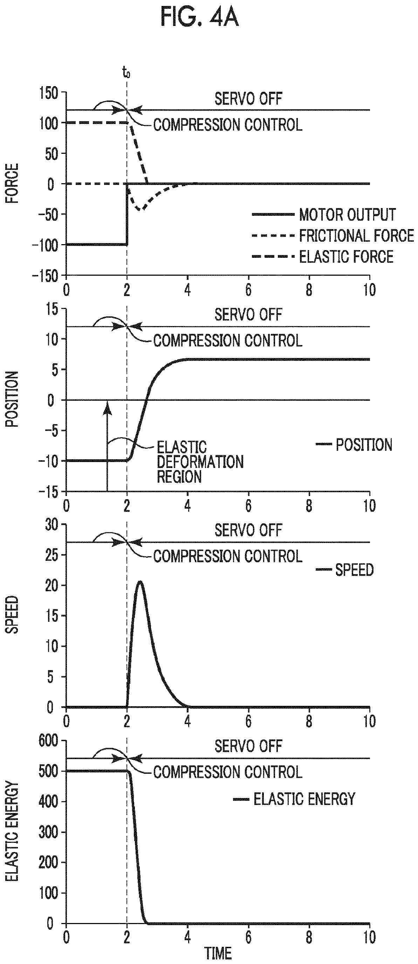

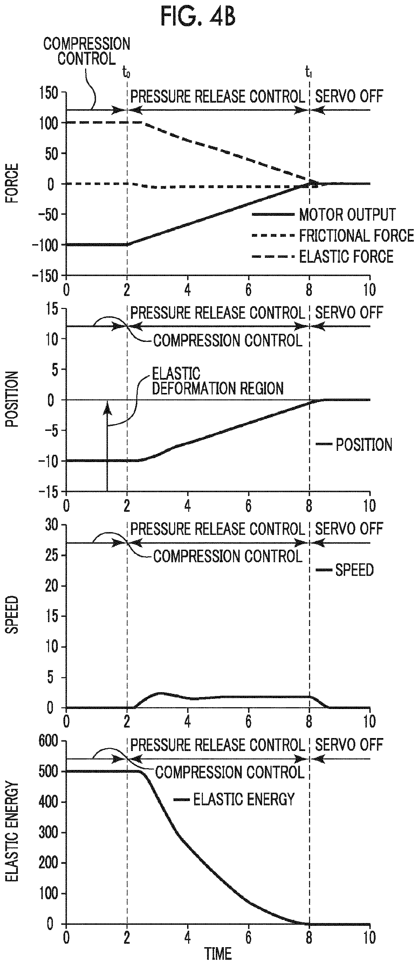

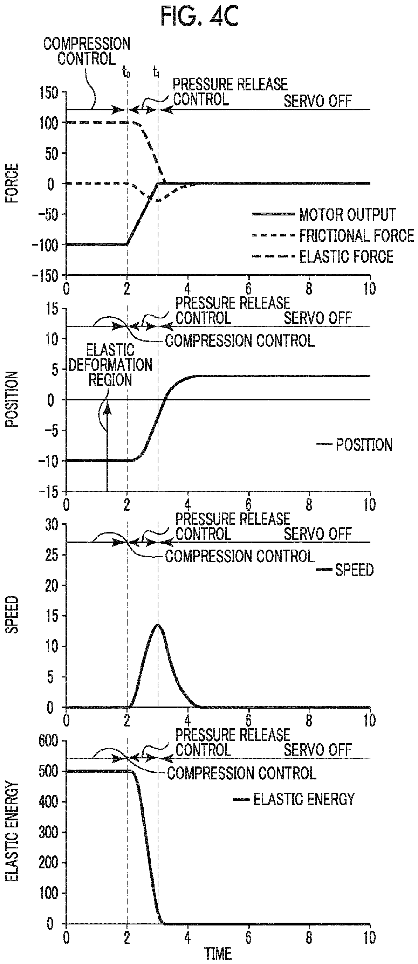

Figs. 4A to 4C are operation waveform diagrams corresponding to the stop sequences of Figs. 3A to 3C. In Figs. 4A to 4C, time to represents a time when the stop event occurs. Further, in Figs. 4B and 4C, a time from t₀ to t₁ represents a period during which the output of the motor 104 is gently lowered.

The above is the operation of the pressure generating device 100. According to the pressure generating device 100 of the embodiment, after the occurrence of the stop event, the torque of the motor 104 gently decreases over time, and therefore, the elastic energy stored in the pressure generatingmechanismbefore the occurrence of the stop event is released gently or on a long time scale. In this way, the violent movement of the movable part can be suppressed, and eventually, reliability can be improved.

The same operation can also be realized by gently lowering the pressure command value P_{REF} from the host controller 180 in a case where the stop event has occurred. However, in this case, if abnormality has occurred in the rotation sensor 106, since the pressure command value P_{REF} can take an abnormal value, the torque of the motor 104 cannot necessarily be gently lowered. As described above, so to speak, an open loop stop sequence which does not depend on the output of the rotation sensor 106 is incorporated in the controller 220, and thus, even in a case where abnormality has occurred in the rotation sensor 106, it is possible to safely stop the pressure generating device 100. As the reason why the motor can be controlled to be correctly stopped even in open loop control, (i) the fact that in a mold clamping process or a holding pressure process, the rotation of the motor is substantially stopped and the rotation angle of the motor corresponding to the amount of distortion of the frame is minute, and therefore, the amount of change in the electric angle of the motor immediately after the release of the elastic energy of the frame can be substantially ignored in the motor drive control, and (ii) the fact that the relationship between a current and torque at the rotational frequency of zero is already known can be mentioned. This knowledge should not be regarded as a general perception of those skilled in the art.

The present invention extends to various devices, circuits, and methods, which are grasped as the block diagram of Fig. 2 or derived from the above description, and is not limited to a specific configuration. Hereinafter, more specific examples which do not narrow the scope of the present invention will be described in order to aid understanding of the essence of the invention or a circuit operation and to clarify them.

### (First Example)

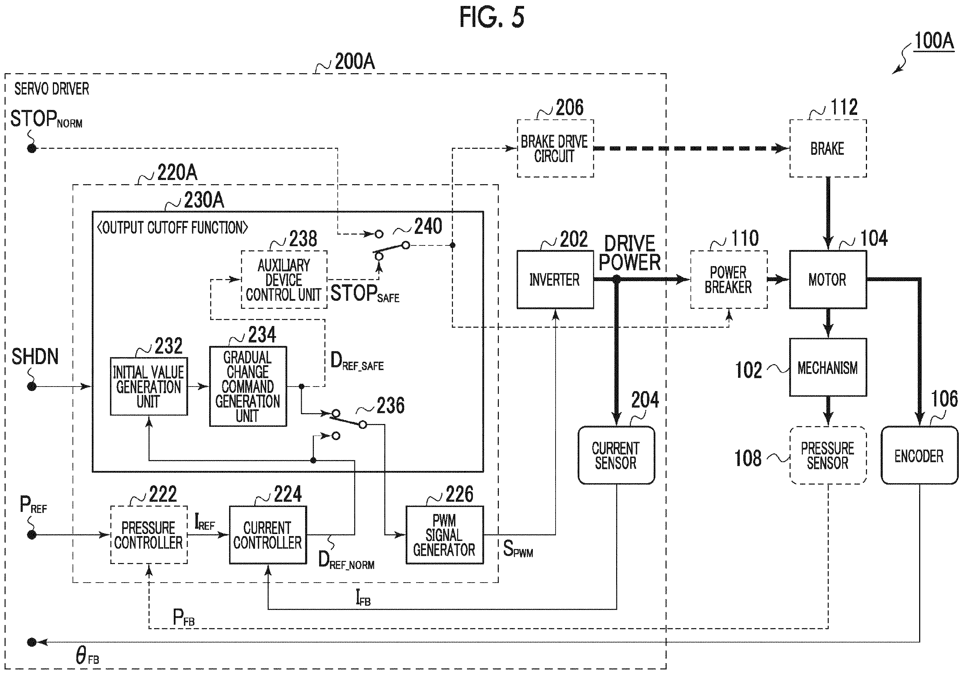

Fig. 5 is a block diagram of a pressure generating device 100A according to a first example. The rotation sensor 106 is an encoder and generates a position detection value θ_{FB} of the rotor of the motor 104. A pressure sensor 108 detects the pressure which is generated by the pressure generating mechanism 102, and generates a pressure detection value P_{FB}. A power breaker 110 is provided between the inverter 202 and the motor 104. A brake 112 is a mechanical brake which decelerates and stops the motor 104.

A servo driver 200A is provided with a current sensor 204 and a brake drive circuit 206, in addition to the inverter 202 and a controller 220A. The current sensor 204 detects a drive current which is supplied from the inverter 202 to the motor 104, and generates a current detection value I_{FB}. The brake drive circuit 206 controls the brake 112.

As described above, the controller 220A can switch between the normal operation mode and the safety stop mode. The controller 220A is configured of an arithmetic processing unit which includes a central processing unit (CPU) and an internal memory, and the CPU executes a program for drive control stored in the internal memory, whereby the function of each block is realized. The controller 220A may be programmable hardware such as a field programmable gate array (FPGA) or may be an application specified integrated circuit (ASIC).

In relation to the normal operation mode, the controller 220A is provided with a pressure controller 222, a current controller 224, and a PWM signal generator 226. The pressure controller 222 generates a current command value I_{REF} according to the pressure command value P_{REF}. For example, the pressure controller 222 adjusts the current command value I_{REF} such that the pressure detection value P_{FB} comes close to the pressure command value P_{REF}. The pressure sensor 108 maybe omitted and may generate the current command value I_{REF} by multiplying the pressure command value P_{REF} by a coefficient. The pressure controller 222 or the current controller 224 may be configured with a PI controller, a PID controller, or the like.

The current controller 224 generates a duty ratio command value D_{REF_NORM} such that the current detection value I_{FB} comes close to the current command value I_{REF}. In the normal operation mode, the duty ratio command value D_{REF_NORM} is input to the PWM signal generator 226. The PWM signal generator 226 generates a PWM signal S_{PWM} having a duty ratio according to the duty ratio command value D_{REF_NORM}. The inverter 202 performs switching according to the PWM signal S_{PWM}.

The servo driver 200A is further provided with an output cutoff controller 230A. An output cutoff command SHDN that is asserted (for example, 1) at the time of the occurrence of the stop event is input to the output cutoff controller 230A. The output cutoff controller 230A switches the operation mode of the controller 220A from the normal operation mode to the safety stop mode in response to the assertion of the output cutoff command SHDN. Then, the output cutoff controller 230A makes the power breaker 110 be in a cutoff state after the electric power which is supplied to the motor 104 becomes zero due to the safety stop mode. Further, the output cutoff controller 230A controls the brake drive circuit 206 to operate the brake 112.

The output cutoff controller 230A retains a drive parameter when the stop event has occurred, and gradually changes the drive parameter using the retained drive parameter as an initial value . An initial value generation unit 232 retains the drive parameter when the stop event has occurred. A gradual change command generation unit 234 generates a drive parameter that gradually changes over time with the value retained by the initial value generation unit 232 as an initial stage.

In the first example, the drive parameter which is used for safety stop is a duty ratio command value D_{REF}. That is, if the output cutoff command SHDN is asserted, the initial value generation unit 232 retains the duty ratio command value D_{REF_NORM0} generated in the current controller 224. Then, the gradual change command generation unit 234 generates a duty ratio command value D_{REF_SAFE} which changes over time with the duty ratio command value D_{REF_NORM0} retained in the initial value generation unit 232 as an initial value.

A selector 236 selects the duty ratio command value D_{REF_NORM} from the current controller 224 in the normal operation mode and selects the duty ratio command value D_{REF_SAFE} from the gradual change command generation unit 234 in the safety stop mode.

An auxiliary device control unit 238 generates an auxiliary device drive command STOP_{SAFE} in accordance with the gradual change command D_{REF_SAFE} in the safety stop mode. A selector 240 selects an auxiliary device drive command STOP_{NORM} in the normal operation mode and selects the auxiliary device drive command STOP_{SAFE} in the safety stop mode. A selected auxiliary device drive command STOP is supplied to the brake drive circuit 206 and the power breaker 110.

### (Second Example)

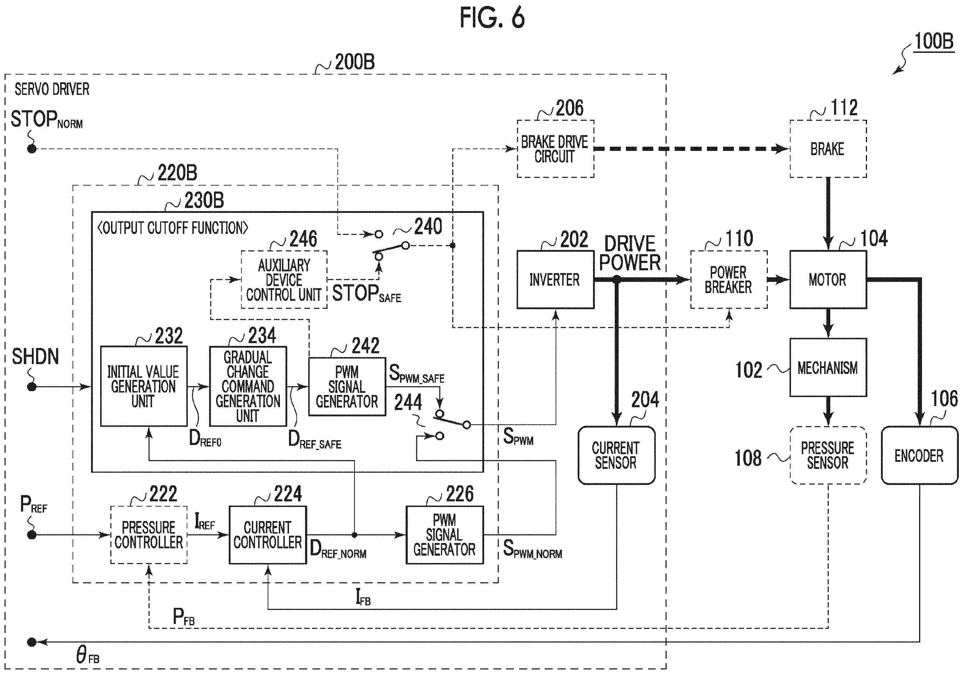

Fig. 6 is a block diagram of a pressure generating device 100B according to a second example. An output cutoff controller 230B is provided with a PWM signal generator 242 in addition to the output cutoff controller 230A in Fig. 5. The PWM signal generator 242 receives the duty ratio command value D_{REF_SAFE} generated in the gradual change command generation unit 234 and generates a PWM signal S_{PWM_SAFE} having a duty ratio according to the duty ratio command value D_{REF_SAFE}. A selector 244 selects a PWM signal S_{PWM_NORM} in the normal operation mode and selects the PWM signal S_{PWM_SAFE} in the safety stop mode.

### (Third Example)

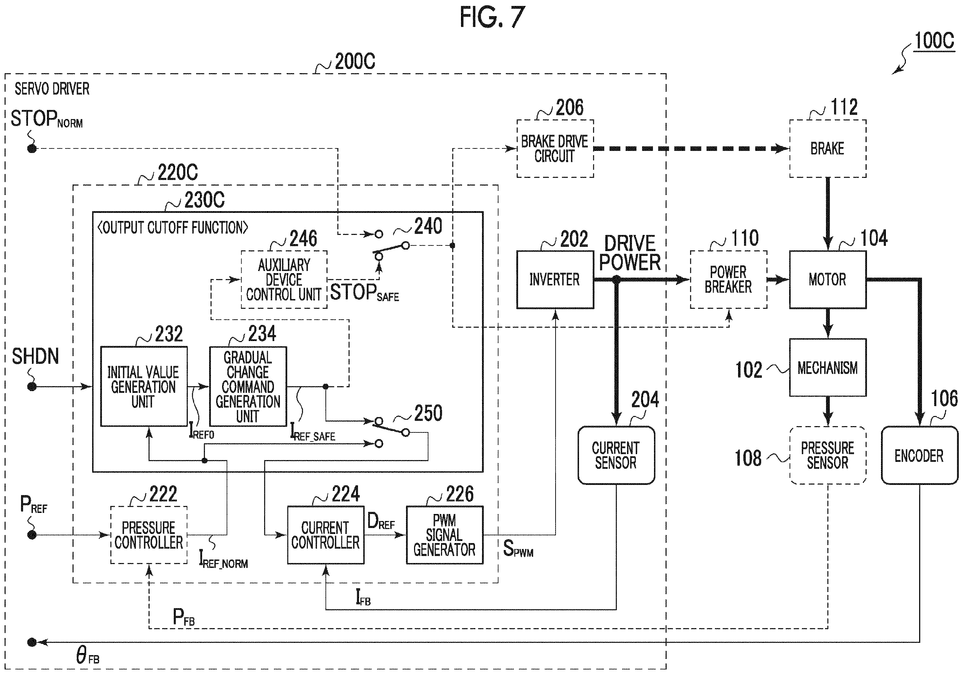

Fig. 7 is a block diagram of a pressure generating device 100C according to a third example. In this example, the drive parameter which is used for the safety stop is the current command value I_{REF}. That is, if the output cutoff command SHDN is asserted, the initial value generation unit 232 retains the current command value I_{REF0} generated in the pressure controller 222. Then, the gradual change command generation unit 234 generates a current command value I_{REF_SAFE} which decreases over time with the current command value I_{REF0} retained in the initial value generation unit 232 as an initial value.

A selector 250 selects the current command value I_{REF_NORM} from the pressure controller 222 in the normal operation mode and selects the current command value I_{REF_SAFE} from the gradual change command generation unit 234 in the safety stop mode. The current controller 224 generates a duty ratio command value D_{REF}, based on the current command value I_{REF} selected by the selector 250.

### (Use)

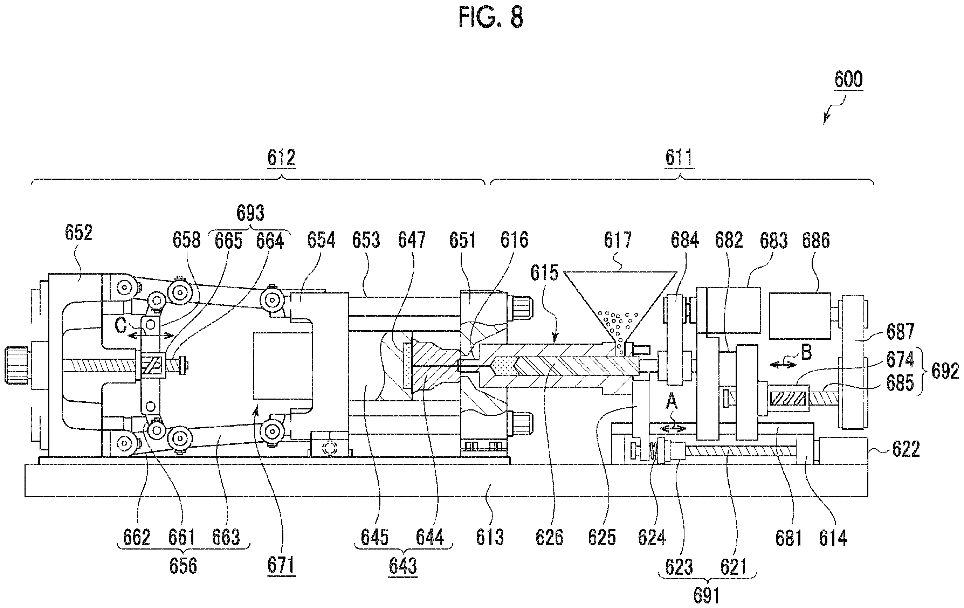

Subsequently, the use of the pressure generating device 100 will be described. The pressure generating device 100 can be suitably used for a mold clamping shaft of an injection molding machine. Fig. 8 is a diagram showing an injection molding machine 600. The injection molding machine 600 is mainly provided with an injection unit 611, a mold clamping unit 612, and an ejector unit 671. These units are supported on a base frame 613. Further, a detachable mold unit 643 is mounted on the injection molding machine 600.

### (1) Mold Unit

The mold unit 643 includes the stationary mold 644 and the movable mold 645 and is mounted on the mold clamping unit 612. The injection unit 611 heats and melts resin and pours (injects) the melted resin into the internal space of the mold unit 643. The mold clamping unit 612 fastens the stationary mold 644 and the movable mold 645, applies pressure to the resin inside thereof, and cools the resin to mold the resin into a shape according to the mold. The ejector unit 671 ejects the molded molding product from the mold unit 643.

### (2) Injection Unit

The injection unit 611 is supported by an injection unit frame 614. A guide 681 is disposed in a longitudinal direction of the injection unit frame 614. Then, a ball screw shaft 621 is rotatably supported by the injection unit frame 614, and one end of the ball screw shaft 621 is connected to a motor for injection unit movement 622. Further, the ball screw shaft 621 is screwed into a ball screw nut 623, and the ball screw nut 623 and the injection unit 611 are connected through a spring 624 and a bracket 625. Therefore, if the motor for injection unit movement 622 is driven in a forward direction or in a reverse direction, the rotary motion of the motor for injection unit movement 622 is converted into linear motion by a combination of the ball screw shaft 621 and the ball screw nut 623, that is, by a screw unit 691, and the linear motion is transmitted to the bracket 625. Then, the bracket 625 is moved in the direction of an arrow A along the guide 681, and thus the injection unit 611 is advanced and retreated.

Further, a plasticizing cylinder 615 is fixed to the bracket 625 toward the front (the left side in the drawing), and an injection nozzle 616 is disposed at a front end (a left end in the drawing) of the plasticizing cylinder 615. Then, a hopper 617 is disposed at the plasticizing cylinder 615, and a screw 626 is disposed in the plasticizing cylinder 615 so as to be able to advance and retreat (move in a right-left direction in the drawing) and be rotatable, and the rear end (a right end in the drawing) of the screw 626 is supported by a support member 682.

A servomotor for plasticizing unit drive (hereinafter abbreviated to a servomotor for plasticizing) 683 is mounted on the support member 682, and the rotation generated by driving the servomotor for plasticizing 683 is transmitted to the screw 626 through a timing belt 684.

A ball screw shaft 685 is rotatably supported on the injection unit frame 614 in parallel with the screw 626, and the ball screw shaft 685 and a servomotor for injection unit drive (hereinafter abbreviated to a servomotor for injection) 686 are connected through a timing belt 687. Then, a front end of the ball screw shaft 685 is screwed into a ball screw nut 674 fixed to the support member 682. Therefore, if the servomotor for injection 686 is driven, the rotarymotion thereof is converted into linear motion by a combination of the ball screw shaft 685 and the ball screw nut 674, that is, by a screw unit 692, and the linear motion is transmitted to the support member 682.

Next, the operation of the injection unit 611 will be described. First, in a metering process, the servomotor for plasticizing 683 is driven to rotate the screw 626 through the timing belt 684, and the servomotor for injection 686 is driven to retreat (move to the right side in the drawing) the screw 626 to a predetermined position through the timing belt 687. At this time, the resin supplied from the hopper 617 is heated and melted in the plasticizing cylinder 615 and is accumulated in front of the screw 626 according to the retreat of the screw 626.

Next, in an injection process, the injection nozzle 616 is pressed against the stationary mold 644, and the servomotor for injection 686 is driven to rotate the ball screw shaft 685 through the timing belt 687. At this time, the support member 682 is moved according to the rotation of the ball screw shaft 685 to advance (move to the left side in the drawing) the screw 626, and therefore, the resin accumulated in front of the screw 626 is injected from the injection nozzle 616 and filled into a cavity 647 formed between the stationary mold 644 and the movable mold 645.

If the screw 626 reaches apredeterminedposition, switching from the injection process to the holding pressure process (so-called V/P switching) is performed. In the holding pressure process, the servomotor for injection 686 is driven to push the screw 626 forward, so that the pressure of the resin in front of the screw 626 is maintained at a setting pressure and the resin which remains in the plasticizing cylinder 615 is pushed toward the mold unit 643. A shortage of the resin due to cooling contraction in the mold unit 643 can be replenished. The holding pressure is detected using a pressure detector, for example. The setting value of the holding pressure may be changed according to the elapsed time from the start of the holding pressure process, or the like. After the holding pressure process, a cooling process is started. In the cooling process, the resin in the cavity 647 is solidified. In order to shorten a molding cycle, the subsequent metering process may be performed during the cooling process.

### (3) Mold Clamping Unit

Next, the mold clamping unit 612 will be described. The mold clamping unit 612 is supported on the base frame 613 so as to face the injection unit 611. The mold clamping unit 612 is provided with a stationary platen 651, a toggle support 652, a tie bar 653 installed between the stationary platen 651 and the toggle support 652, a movable platen 654 which is disposed to face the stationary platen 651 and disposed so as to be able to advance and retreat along the tie bar 653, and a toggle mechanism 656 disposed between the movable platen 654 and the toggle support 652. Then, the stationary mold 644 and the movable mold 645 are respectively mounted on the stationary platen 651 and the movable platen 654 so as to face each other.

The toggle mechanism 656 is made so as to perform mold closing, mold clamping, and mold opening by making the movable mold 645 be brought into contact with and separated from the stationary mold 644 by advancing and retreating the movable platen 654 along the tie bar 653 by advancing and retreating a crosshead 658 between the toggle support 652 and the movable platen 654 by a servomotor for mold clamping (not shown).

Therefore, the toggle mechanism 656 is composed of a toggle lever 661 supported so as to be able to oscillate with respect to the crosshead 658, a toggle lever 662 supported so as to be able to oscillate with respect to the toggle support 652, and a toggle arm 663 supported so as to be able to oscillate with respect to the movable platen 654, in which the toggle lever 661 and the toggle lever 662 are link-connected and the toggle lever 662 and the toggle arm 663 are link-connected.

Further, a ball screw shaft 664 is supported so as to be rotatable with respect to the toggle support 652, and the ball screw shaft 664 is screwed into a ball screw nut 665 fixed to the crosshead 658. Then, a servomotor for mold clamping (not shown) is mounted on the side surface of the toggle support 652 in order to rotate the ball screw shaft 664.

Therefore, if the servomotor for mold clamping is driven, the rotary motion of the servomotor for mold clamping is converted into linear motion by a combination of the ball screw shaft 664 and the ball screw nut 665, that is, by a screw unit 693, and the linear motion is transmitted to the crosshead 658, and thus the crosshead 658 is advanced and retreated in a direction of an arrow C. That is, if the crosshead 658 is advanced (moved to the right side in the drawing), the toggle mechanism 656 is extended, so that the movable platen 654 is advanced, and thus mold closing and mold clamping are performed, and if the crosshead 658 is retreated (moved to the left side in the drawing), the toggle mechanism 656 is bent, so that the movable platen 654 is retreated, and thus mold opening is performed.

### (4) Electric System

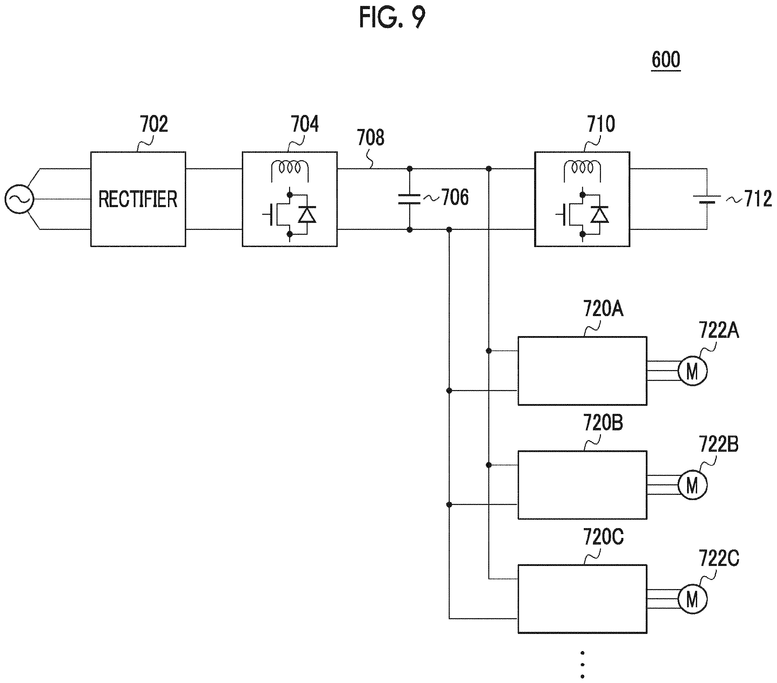

Fig. 9 is a block diagram showing an electric system of the injection molding machine 600. A rectifier 702 is connected to an alternating-current power supply and rectifies an alternating current to generate a direct-current voltage. A converter 704 stabilizes the direct-current voltage from the rectifier 702 to a predetermined voltage level and generates a DC link voltage V_{DC} in a DC link bus 708. A smoothing capacitor 706 for stabilizing the DC link voltage V_{DC} is connected to the DC link bus 708. A plurality of inverters 720 are connected to the DC link bus 708. Each of the inverters 720 drives a corresponding motor 722. Motors 722A to 722C may be the motor for injection unit movement 622, the servomotor for plasticizing 683, the servomotor for injection 686, and the servomotor for mold clamping described above. In addition, the injection molding machine 600 is provided with various servomechanisms, and the inverter 720 and the motor 722 are provided at each shaft.

A bidirectional converter 710 is provided between the DC link bus 708 and an electric storage module 712. The electric storage module 712 mainly functions as a backup power supply, and in a case where the alternating-current power supply is cut off, or the like, the bidirectional converter 710 is changed to the converter 704 and supplies the electric power of the electric storage module 712 to the smoothing capacitor 706. Further, in a case where the inverter 720 performs a regenerative operation and surplus energy is generated, the bidirectional converter 710 charges the electric storage module 712 with the surplus energy.

The present invention has been described above based on the embodiment. This embodiment is merely an example, and it will be understood by those skilled in the art that various modification examples can be made in the combination of the respective constituent elements or the respective processing processes and such modification examples are also within the scope of the present invention as defined in the appended claims. Hereinafter, such modification examples will be described.

### (Modification Example 1)

In Figs. 5 to 7, the pressure sensor 108, the brake drive circuit 206, and the power breaker 110 shown by a broken line, and the signal lines associated with them and shown by a broken line are optional, and some or all of them can be appropriately omitted.

### (Modification Example 2)

The use of the pressure generating device 100 is not limited to the injection molding machines and can also be applied to an industrial machine such as a press machine.

### (Modification Example 3)

In the safety stop sequence, a modification example can also be present in a method of gradually reducing the electric power which is supplied to the motor. For example, the power supply voltage (DC link voltage) which is supplied to the inverter may be gently lowered.

### Brief Description of the Reference Symbols

- 100:: pressure generating device
- 102:: pressure generating mechanism
- 104:: motor
- 106:: rotation sensor
- 108:: pressure sensor
- 110:: power breaker
- 112:: brake
- 180:: host controller
- 200:: servo driver
- 202:: inverter
- 204:: current sensor
- 206:: brake drive circuit
- 220:: controller
- 222:: pressure controller
- 224:: current controller
- 226:: PWM signal generator
- 230:: output cutoff controller
- 232:: initial value generation unit
- 234:: gradual change command generation unit
- 236:: selector
- 238:: auxiliary device control unit
- 240:: selector
- 242:: PWM signal generator
- 244, 250:: selector
- 600:: injection molding machine
- 611:: injection unit
- 612:: mold clamping unit
- 613:: base frame
- 614:: injection unit frame
- 615:: plasticizing cylinder
- 616:: injection nozzle
- 617:: hopper
- 621:: ball screw shaft
- 622:: motor for injection unit movement
- 623:: ball screw nut
- 624:: spring
- 625:: bracket
- 626:: screw
- 630:: mold clamping servomotor
- 632:: motion conversion mechanism
- 643:: mold unit
- 644:: stationary mold
- 645:: movable mold
- 646:: frame
- 647:: cavity
- 651:: stationary platen
- 652:: toggle support
- 653:: tie bar
- 654:: movable platen
- 656:: toggle mechanism
- 658:: crosshead
- 661, 662:: toggle lever
- 663:: toggle arm
- 664:: ball screw shaft
- 665:: ball screw nut
- 671:: ejector unit
- 674:: ball screw nut
- 681:: guide
- 682:: support member
- 683:: servomotor for plasticizing
- 684:: timing belt
- 685:: ball screw shaft
- 686:: servomotor for injection
- 687:: timing belt
- 691, 692, 693:: screw unit
- 702:: rectifier
- 704:: converter
- 706:: smoothing capacitor
- 708:: DC link bus
- 710:: bidirectional converter
- 712:: electric storage module
- 720:: inverter
- 722:: motor

## Claims

1. An industrial machine comprising:
a pressure generating device (100),
wherein the pressure generating device (100) includes
a motor (104) that drives a pressure generating mechanism (102), and
a servo driver (200) that is configured to control the motor (104) such that the pressure generating mechanism (102) generates a desired pressure, **characterized in that** the servo driver (200) is configured to reduce supply electric power to the motor (104) not instantaneously but gently over time, if a stop event to cut off energization of the motor (104) occurs in a state where rotation of the motor (104) is substantially stopped and the torque of the motor is generated.

2. The industrial machine according to claim 1 which is an injection molding machine comprising:
the motor (104);
a motion conversion mechanism that converts rotary motion of the motor (104) into linear motion; and
the servo driver (200) that drives the motor (104),
wherein the servo driver (200) is configured to reduce supply electric power to the motor (104) not instantaneously but over time, if a stop event to cut off energization of the motor (104) occurs during a mold clamping process or a holding pressure process.

3. The industrial machine according to claim 2, further comprising:
a rotation sensor (106) that is configured to generate an output indicating a rotation state of the motor (104),
wherein the servo driver (200) is configured to reduce supply electric power to the motor (104) over time without depending on the output of the rotation sensor (106).

4. The industrial machine according to claim 2 or 3, wherein the servo driver (200) is configured to retain a drive parameter when the stop event has occurred, and to gradually change the drive parameter using the retained drive parameter as an initial value.

5. The industrial machine according to any one of claims 2 to 4, wherein the servo driver (200) is configured to drive the motor (104) with pulse width modulation (PWM), to retain a duty ratio when the stop event has occurred, and to gradually change the duty ratio using the retained duty ratio as an initial value.

6. The industrial machine according to any one of claims 2 to 4, wherein the servo driver (200) is configured to retain a current command value when the stop event has occurred, and to gradually reduce the current command value using the retained current command value as an initial value.

## Patentansprüche

1. Industriemaschine, umfassend:
eine Druckerzeugungsvorrichtung (100),
wobei die Druckerzeugungsvorrichtung (100) aufweist:
einen Motor (104), der einen Druckerzeugungsmechanismus (102) antreibt, und
einen Servoantrieb (200), der konfiguriert ist, um den Motor (104) zu steuern, so dass der Druckerzeugungsmechanismus (102) einen gewünschten Druck erzeugt,
**dadurch gekennzeichnet, dass**
der Servoantrieb (200) konfiguriert ist, um eine Zufuhr elektrischer Leistung zu dem Motor (104) nicht unmittelbar, sondern sanft im Laufe der Zeit zu reduzieren, wenn ein Stoppereignis zum Abschalten einer Energiezufuhr des Motors (104) in einem Zustand eintritt, in dem eine Drehung des Motors (104) im Wesentlichen gestoppt wird und das Drehmoment des Motors erzeugt wird.

2. Industriemaschine nach Anspruch 1, welche eine Spritzgießmaschine ist, umfassend:
den Motor (104);
einen Bewegungsumwandlungsmechanismus, der eine Drehbewegung des Motors (104) in eine lineare Bewegung umwandelt; und
den Servoantrieb (200), der den Motor (104) antreibt,
wobei der Servoantrieb (200) konfiguriert ist, um eine Zufuhr elektrischer Leistung zu dem Motor (104) nicht unmittelbar, sondern im Laufe der Zeit zu reduzieren, wenn ein Stoppereignis zum Abschalten einer Energiezufuhr des Motors (104) während eines Formklemmvorgangs oder eines Druckhaltevorgangs eintritt.

3. Industriemaschine nach Anspruch 2, ferner umfassend:
einen Drehsensor (106), der konfiguriert ist, um eine Ausgabe zu erzeugen, die einen Drehzustand des Motors (104) angibt,
wobei der Servoantrieb (200) konfiguriert ist, um eine Zufuhr elektrischer Leistung zu dem Motor (104) im Laufe der Zeit unabhängig von der Ausgabe des Drehsensors (106) zu reduzieren.

4. Industriemaschine nach Anspruch 2 oder 3, wobei der Servoantrieb (200) konfiguriert ist, um einen Antriebsparameter beizubehalten, wenn das Stoppereignis eingetreten ist, und um den Antriebsparameter unter Verwendung des beibehaltenen Antriebsparameters als Anfangswert graduell zu verändern.

5. Industriemaschine nach einem der Ansprüche 2 bis 4, wobei der Servoantrieb (200) konfiguriert ist, um den Motor (104) mit Pulsbreitenmodulation (PWM) anzutreiben, um ein Tastverhältnis beizubehalten, wenn das Stoppereignis eingetreten ist, und um das Tastverhältnis unter Verwendung des beibehaltenen Tastverhältnisses als Anfangswert graduell zu verändern.

6. Industriemaschine nach einem der Ansprüche 2 bis 4, wobei der Servoantrieb (200) konfiguriert ist, um einen Strombefehlswert beizubehalten, wenn das Stoppereignis eingetreten ist, und um den Strombefehlswert unter Verwendung des beibehaltenen Strombefehlswerts als Anfangswert graduell zu reduzieren.

## Revendications

1. Une machine industrielle comprenant :
un dispositif de génération de pression (100),
dans laquelle le dispositif de génération de pression (100) comprend un moteur (104) qui entraîne un mécanisme de génération de pression (102), et
une servocommande (200) qui est configurée pour contrôler le moteur (104) de sorte que le mécanisme de génération de pression (102) génère une pression souhaitée,
**caractérisée en ce que**
la servocommande (200) est configurée pour réduire l'alimentation en électricité du moteur (104) de manière non instantanée mais lentement au fil du temps, si un événement d'arrêt destiné à couper l'alimentation du moteur (104) se produit dans un état dans lequel la rotation du moteur (104) est sensiblement arrêtée et le couple du moteur est généré.

2. La machine industrielle selon la revendication 1, qui est une machine de moulage par injection comprenant :
le moteur (104) ;
un mécanisme de conversion de mouvement qui convertit le mouvement de rotation du moteur (104) en mouvement linéaire ; et
la servocommande (200) qui entraîne le moteur (104),
dans laquelle la servocommande (200) est configurée pour réduire l'alimentation en électricité du moteur (104) de manière non instantanée mais au fil du temps, si un événement destiné à couper l'alimentation du moteur (104) se produit pendant un processus de fixation de moule ou un processus de maintien de la pression.

3. La machine industrielle selon la revendication 2, comprenant en outre :
un capteur de rotation (106) qui est configuré pour générer une sortie qui indique un état de rotation du moteur (104),
dans laquelle la servocommande (200) est configurée pour réduire l'alimentation en électricité du moteur (104) au fil du temps sans dépendre de la sortie du capteur de rotation (106).

4. La machine industrielle selon la revendication 2 ou 3, dans laquelle la servocommande (200) est configurée pour conserver un paramètre de commande lorsque l'évènement d'arrêt s'est produit, et pour modifier progressivement le paramètre de commande en utilisant le paramètre de commande conservé comme valeur initiale.

5. La machine industrielle selon l'une quelconque des revendications 2 à 4, dans laquelle la servocommande (200) est configurée pour entraîner le moteur (104) avec une modulation de durée d'impulsion (PWM), afin de conserver un rapport de fonctionnement lorsque l'évènement d'arrêt s'est produit, et pour modifier progressivement le rapport de fonctionnement en utilisant le rapport de fonctionnement conservé comme valeur initiale.

6. La machine industrielle selon l'une quelconque des revendications 2 à 4, dans laquelle la servocommande (200) est configurée pour conserver une valeur de commande de courant lorsque l'évènement d'arrêt s'est produit, et pour réduire progressivement la valeur de commande de courant en utilisant la valeur de commande de courant conservée comme valeur initiale.
